# EUROPEAN PATENT APPLICATION

(11) **EP 2 816 629 A1**
(43) Date of publication of application: **24.12.2014**
(21) Application number: 13161560.1
(22) Date of filing: 28.03.2013
(51) Int. Cl.: H01M 2/02, H01G 11/10, H01G 11/78, H01M 2/10, H01M 2/20, H01M 10/60

(54) **Energy storage cell**

(71) Applicant: Technische Universität München, 80333 München (DE)
(72) Inventor: Brand, Martin, 80335 Munich (DE); Müller, Marcus, 80335 Munich (DE)
(74) Representative: Lucke, Andreas

(57) **Abstract**

An energy storage cell (100) comprises an electric energy source (50) and a housing (10), wherein the electric energy source (50) is arranged in the housing (10) and has an anode and a cathode. The housing (10) comprises a circumferential section and two opposing end sections (30, 35), the circumferential section defining a lateral area of the housing (10) and the end sections (30, 35) defining base areas of the housing (10). The lateral area comprises at least a first electrically conductive surface portion (11) and a second electrically conductive surface portion (12), the first and second surface portions (11, 12) being electrically isolated from each other. The first surface portion (11) is electrically coupled to the anode of the electric energy source (50) and the second surface portion (12) is electrically coupled to the cathode of the electric energy source (50).

## Description

### Field

The present invention relates to the field of energy storage cells and to energy storage systems comprising a plurality of energy storage cells. In particular, the invention relates to an energy storage cell for an electrically driven vehicle, a stationary storage system, an uninterruptible power supply (UPS) or for other purposes.

### Background

Current energy storage systems often comprise a large number of energy storage cells. For many current and future applications, such as e.g. stationary storage systems, electric vehicles, UPS, the number of connected cells is even increasing. Usually, an energy storage cell comprises an electric energy source, such as e.g. an electrochemical generator, which may e.g. be in the shape of a jelly roll that includes one or more anode and cathode layers rolled up with a separator layer in between. Accordingly, energy storage cells are often of cylindrical shape. To connect the plurality of energy storage cells of an energy storage system electrically, the energy storage cells are commonly contacted at an end face of the jelly rolls. For known energy storage cells, at most one electrical contact is placed on a circumferential section of a housing of the energy storage cell.

Generally, there are three known types of energy storage cell designs: pouch-/coffee-bag, cylindrical and prismatic. As an example, batteries having energy storage cell arrays with plan view outlines in the form of equilateral triangles, regular pentahedra or regular hexahedra are known, e.g. from US 4,707,420 A. The anodes and cathodes of neighbouring cells are connected by providing a wiring at an end face of each cell.

Similarly, DE 10 2009 022 678 Al discloses a battery cell having a prismatic housing. The housing has a hexagonal base area and is made of a metal plate. Still, to be able to electrically connect neighbouring cells, an electrical coupling must be provided at the end face of each cell.

For these known energy storage cells, different ways to connect the cells are employed. Especially for larger systems, additional elements and techniques for the electrical connection are necessary (e.g. current collectors welding). In many cases, a wire coupling or another type of additional connection element is required to interconnect the plurality of energy storage cells of an energy storage system. Assembling a large number of these energy storage cells to form an energy storage system is therefore complicated and expensive. Moreover, the electrical and mechanical connections between the energy storage cells are practically irreversible, resulting in low serviceability, a low chance to repair a damaged system, and a high voltage in the event of fault, because no sudden disconnection is possible. Due to this high-voltage problem and the low serviceability, energy storage systems are usually made of 60 V-modules, resulting in an even larger complexity, production expenditure, and error rate.

### Summary

It is therefore an objective of the present invention to provide an energy storage cell that allows an easy and flexible assembly and disassembly of an energy storage system comprising a plurality of such energy storage cells. The invention solves this problem by providing the energy storage cell according to claim 1 and the energy storage system according to claim 11. Preferred embodiments are described in the depending claims.

In a first aspect, an energy storage cell is provided that comprises an electric energy source and a housing, the electric energy source being arranged in the housing and having an anode and a cathode. The housing comprises a circumferential section and two opposing end sections, the circumferential section defining a lateral area of the housing and the end sections defining base areas of the housing. The lateral area comprises at least a first electrically conductive surface portion and a second electrically conductive surface portion, the first and the second surface portions being electrically isolated from each other. The first surface portion is electrically coupled to the anode of the electric energy source and the second surface portion is electrically coupled to the cathode of the electric energy source.

By electrically coupling the anode and the cathode of the electric energy source to different lateral surface portions of the housing, the energy storage cell may easily be electrically contacted via the lateral area of the housing. In some embodiments, the first and second surface portions may be partially or completely plane as described in more detail below. As a matter of nomenclature, in the present disclosure, the anode refers to the negative pole of the electric energy source, while the cathode refers to the positive pole of the electric energy source.

When providing an energy storage system comprising an array of the described energy storage cells, two adjacent energy storage cells may easily be connected to each other by arranging the energy storage cells next to each other, such that the conductive surface portions of the cells touch each other. As the anode and the cathode of the electric energy source are coupled to surface portions of the housing, no wiring at the end faces of the energy storage cells is required. Hence, no extra effort and/or elements for electrical and/or mechanical connection are necessary and the assembly of a plurality of energy storage cells is facilitated. Moreover, as the energy storage cells may easily be arranged next to each other, and thereby mechanically and electrically be connected, there is e.g. no need to solder or weld the energy storage cells. Hence, the risk of thermal or mechanical damage of the energy storage cells during the assembly is reduced. Furthermore, as the lateral area of the energy storage cell usually offers a much larger surface area than the end faces, a larger area may be used for conducting the electrical current from the energy storage cell during operation. Accordingly, the current density and the contact resistance are reduced, thereby reducing the heating due to the current flow and thus improving the reliability of the energy storage cell.

In addition, as no permanent attachment such as by welding or soldering is required, a failed energy storage cell may easily be replaced and serviceability in general is improved. Furthermore, the energy storage cells may easily be removed from one energy storage system and then be placed in another energy storage system. Re-use of the energy storage cells is therefore facilitated, reducing the amount of potentially harmful waste. Furthermore, the disassembling starts at cell-level and therefore at low voltages, such that safety issues are massively reduced as compared to known energy storage cell arrays.

In contrast to known battery systems, the energy storage cells of the present disclosure provide the following additional advantages: 1. Less material needed for electrical and mechanical connection, 2. less production expenditure, 3. because of 1. and 2.: lower complexity and lower error rate, 4. in the event of fault: sudden disconnecting is possible, hence no dangerous voltages and no thermal coupling of cells, and 5. more flexibility and no need for 60V-modules.

In some embodiments, the first and the second surface portions may be oriented in different directions. In this way, each of the first and the second surface portions is easily accessible without the risk of inadvertently contacting an incorrect surface portion having an unwanted polarity. When combined with other energy storage cells, the energy storage cell may easily be rotated to adjust the polarity of the surface portion touching an adjacent energy storage cell. Hence, complex circuits of energy storage cells coupled in parallel and/or in series may be assembled by correctly choosing the orientation of the energy storage cells and their position within the circuit as described in more detail below. An orientation of surface portions in different directions may, e.g. comprise that the normal vectors on the first and second surface portions are pointing in different directions.

In some embodiments, the first and the second surface portions may be arranged on opposite sides of the circumferential section. This allows for a large spatial separation between them. In some embodiments, the first surface portion and the second surface portion have an equally large surface area. Hence, the current density would be equal in operation. Additionally or alternatively, the first and the second surface portion may be symmetrically arranged over the lateral area of the housing. In this embodiment, the first and the second surface portions are equally accessible.

The electric energy source may, in some embodiments, comprise an electrochemical generator. The electrochemical generator may e.g. include an electrochemical converter for converting electrical energy to chemical energy and vice versa and an electrochemical storage. Additionally or alternatively, the electric energy source may comprise other storage means or sources of electric energy, such as a capacitor. In some preferred embodiments, the electric energy source comprises a jelly roll. A jelly roll is a stack of at least an anode, a separator layer and a cathode which are rolled up. In some embodiments, the housing completely surrounds the electric energy source.

In a preferred embodiment, the housing extends along a longitudinal axis. The base areas may extend transversely, in particular perpendicularly to the longitudinal axis. The lateral area may extend around the longitudinal axis. The housing may, e.g. have the shape of a column. A length of the housing measured between the base areas may be larger than a diameter of the circumferential section. In some embodiments, the length of the housing may be larger than twice, in particular larger than three times and preferably larger than four times the diameter of the circumferential section. These embodiments provide a large area ratio of the lateral area to the base areas, such that more of the overall exterior surface of the housing may be used to conduct current, thereby reducing the current density and the contact resistance.

The base areas may be opposite each other, i.e. the base areas may be located at opposite ends of the housing. In some embodiments, the base areas are parallel to each other. Alternatively or additionally, the base areas may be plane. This allows two or more energy storage cells to be stacked one upon the other as described in more detail below. Alternatively or additionally, the base areas may be equal in size. One or both of the base areas may enclose a right angle with the lateral area.

In some embodiments, the housing is in the shape of a cylinder or of a truncated cone. In these embodiments, the base areas are base areas of the cylinder or the truncated cone, respectively, and the lateral area is a circumferential area of the cylinder or the truncated cone, respectively.

However, according to a more preferred embodiment, the lateral area of the housing comprises a number of lateral facets with adjacent lateral facets being separated by lateral edges of the housing. Providing edges on the lateral area allows for an easy identification of different lateral facets, possibly being coupled to different poles of the electric energy source, i.e. to the anode or the cathode.

In some embodiments, the lateral facets are plane. This allows a good contact between lateral facets of adjacent energy storage cells in an energy storage system. In some embodiments, the lateral facets may be generally plane and may have a surface structure comprising protrusions and/or recesses as described in more detail below.

In some embodiments, the housing may be in the shape of a polyhedron, in particular, a prismatoid. In some specific embodiments, the housing may be in the shape of a truncated pyramid, with each of the base areas defining a polygon with n corners (n>2).

Yet, it is preferred that the housing is in the shape of a prism. In these embodiments, the base areas of the housing correspond to base areas of the prism and the lateral area corresponds to a lateral area, i.e. a circumferential area, of the prism comprising a number of lateral facets separated by lateral edges as described above. A prism provides equally sized and shaped base areas. The prism may, e.g., be a right prism, i.e. the base areas and the lateral area may join at right angles, which facilitates the assembly of a large number of energy storage cells. It is, in particular, preferred that the prism is a regular prism. In a regular prism, the lateral facets are of the same size and shape. This allows for an easier assembly and for an improved current distribution over the lateral area.

The housing may, in particular, be in the shape of a hexagonal prism, preferably, a regular hexagonal prism. A number of regular hexagonal prisms may easily be assembled one next to each other to completely fill a given space.

According to a preferred embodiment, the first surface portion and the second surface portion extend over different lateral facets of the housing. The different poles of the energy storage cell may thus easily be identified by a user. Moreover, with a surface portion extending over an entire surface of a lateral facet, the exterior surface area is used in an optimum way to reduce the current density and the contact resistance and thereby improving the reliability of the energy storage cell.

In a preferred embodiment, each of the first and the second surface portions extends over at least two lateral facets, in particular, over at least two adjacent lateral facets. By coupling the anode and/or the cathode of the electric energy source to more than one lateral facet, the current density and the contact resistance may further be reduced. Moreover, with adjacent lateral faces having the same polarity, the assembly is generally easier. The first and the second surface portions each may extend over an equal number of lateral facets. In embodiments, in which the lateral area comprises n lateral facets, with n being an even number, the first and the second surface portions each may extend over n/2 lateral facets, preferably n/2 adjacent facets. In embodiments, in which the first and/or the second surface portion extends over one or more lateral facets, the first and/or the second surface portion may extend over an entire surface area of the one or more lateral facets.

In some embodiments, each of the lateral facets is part of either the first or the second surface portion. Yet, in other embodiments, the lateral area comprises a third surface portion, which may e.g. be electrically insulating. This could be done e.g. by applying an insulative coating such as an insulation-lacquer on a third surface portion of the lateral area. Alternatively or additionally, a non-conductive element, such as an elastomer/plastic may be put in between two adjacent energy storage cells.

In some embodiments, the lateral facets are plane. However, in a preferred embodiment, the first surface portion comprises a first surface structure defining at least one protrusion and/or at least one recess, and the second and/or the first surface portion comprises a second surface structure defining at least one recess and/or at least one protrusion, wherein the first surface structure is formed to match the second surface structure. The surface structures result in a larger contact area when two energy storage cells are coupled. Moreover, using appropriate surface structures may prevent an undesired assembly of energy storage cells with an incorrect polarity of adjacent energy storage cells.

In some embodiments, the first and/or the second surface portions may comprise a label to identify the surface portions as being coupled with the anode or the cathode of the electric energy source. In some embodiments, the first and/or the second portion may be provided with a coloring. To this effect, all or a section of the first surface portion may be of a first color, such as red. Alternatively or additionally, all or a section of the second surface portion may be of a second color, such as blue. The user may thus easily identify the polarities of the energy storage cell. The first and the second surface portions may e.g. comprise differently colored conductive coatings.

In a preferred embodiment, at least one of the end sections of the housing, preferably each of the end sections of the housing, is made of an electrically insulating material. This allows two or more energy storage cells to be stacked directly one upon the other, such that no separation distance or additional insulation layer is needed. In these embodiments, one or both base areas are non-conductive. The electrically insulating material may, for example, comprise a rubber or a plastic material. The electrically insulating material may, in some embodiments, comprise an electrically insulating coating on the housing. In some embodiments, the electrically insulating material is pressed into an opening of the housing or is otherwise affixed to the circumferential section.

Alternatively, one of the end sections is electrically conductive and is electrically coupled to the anode or the cathode of the electric energy source. In particular, in some embodiments, the end sections may be electrically conductive and one of the end sections is electrically coupled to the anode of the electric energy source, while the other one of the end sections is electrically coupled to the cathode of the electric energy source.

According to a preferred embodiment, the energy storage cell further comprises at least one peripheral cavity formed between the electric energy source and the circumferential section of the housing, in particular, at a lateral edge of the housing. This is, in particular, preferred in combination with a cylindrical electric energy source, such as a jelly roll or a rolled-up double-layer capacitor. The peripheral cavity may e.g. be a peripheral channel. In some embodiments, the peripheral cavity may e.g. extend along a longitudinal axis of the housing. In some embodiments, a peripheral cavity is formed between the electric energy source and the housing at each lateral edge of the housing. E.g., for a cylindrical electric energy source and a hexagonal housing, six peripheral cavities may be formed.

The peripheral cavity may, in some embodiment, be used to introduce a fluid, such as a cooling or a heating fluid. Additionally or alternatively, the peripheral cavity may serve as a cushioning element in case of a crash. When the energy storage cell is compressed by a high lateral force, as e.g. during an accident, the peripheral cavity acts as a buffer to cushion the forces, such that the electric energy source and/or its casing remain undamaged. The peripheral cavity or the peripheral cavities may be empty or may e.g. be filled with a liquid or an elastic element. The peripheral cavity or the peripheral cavities help to reduce the mechanical forces upon the electric energy source. In a severe accident, the housing may be deformed. Providing peripheral cavities as described in this disclosure, even though the electric energy source may also be deformed, it is still protected against severe damage like e.g. internal short circuits.

In a preferred embodiment, the energy storage cell further comprises a central cavity formed within the electric energy source. The central cavity may, e.g. be in the shape of a channel and/or may extend along a longitudinal axis of the housing and/or through a length of the electric energy source. For example, the electric energy source may comprise a jelly roll rolled up on a spindle. The spindle may be hollow to form the central cavity inside. In some embodiments, the spindle may also mechanically attach two or more components of the housing to each other, such as e.g. the two end sections. Similar to the peripheral cavity, the central cavity may be used to introduce a heating or a cooling fluid. Additionally or alternatively, the central cavity may cushion the effect of a lateral thrust. The central cavity may be empty or may be filled with a liquid or an elastic element.

It is, in particular, preferred that the at least one peripheral cavity and/or the central cavity is accessible through the housing, in particular, through at least one opening in at least one of the end sections of the housing. This embodiment allows the introduction of a cooling fluid to cool down the electric energy sourcesuch as a jelly roll during operation. Similarly, a heating fluid may be introduced in order to increase the temperature of the electric energy source to provide for an optimum operation temperature of the electric energy source, e.g. at the start of operation. This is, in particular, advantageous when the energy storage cell is used in cold environments. It is further preferred that the at least one peripheral cavity and/or the central cavity is accessible through openings in each of the end sections, preferably in each of the base areas. E.g., one end section may form an inlet opening for a fluid, while the opposing end section may form an outlet opening for the fluid. In some use cases, the central cavity and/or the at least one peripheral cavity may by coupled to a fluid circuit as described in more detail below.

In a further aspect, an energy storage system is provided, comprising a first set of energy storage cells, each of the energy storage cells of the first set being of the aforementioned type. The first surface portion and/or the second surface portion of each energy storage cell of the first set is in electrical and mechanical contact with the first surface portion and/or the second surface portion of another one of the energy storage cells of the first set.

In some embodiments, each lateral facet of each energy storage cell of the first set is in electrical and mechanical contact with at least and/or at most one first surface portion or one second surface portion of another one of the energy storage cells of the first set. In some embodiments, the energy storage cells of the first set may be arranged parallel and next to each other. The energy storage cells of the first set may e.g. all be identical.

As discussed above, two or more energy storage cells of the first set may be easily put next to each other with the first and/or the second surface portions of adjacent cells touching each other. Hence, no additional wiring, welding or soldering is needed to establish an electrical and mechanical contact between the energy storage cells. By rotating the energy storage cells accordingly, two or more of the energy storage cells may be connected in parallel or in series, according to the desired electric circuit.

In some embodiments, an electrically conductive elastomer may be put in between the surface portions of two adjacent energy storage cells in order to even out irregularities of their surfaces.

In some embodiments, adjacent energy storage cells may still be soldered or welded together for mechanical stabilization. However, it is preferred that the energy storage system comprises a fastening element, wherein the fastening element at least partially encloses the first set of energy storage cells to keep the energy storage cells together, wherein, in particular, the fastening element applies a mechanical force on the first set of energy storage cells to press the first set of energy storage cells together.

In this embodiment, no direct mechanical attachment of adjacent energy storage cells is required. Rather, the energy storage cells may easily be put next to each other to provide the desired output voltage. As soon as each energy storage cell is put in its proper position, the fastening element may be put around the energy storage cells. Hence, the energy storage cells may easily be re-arranged by removing the fastening element. In some embodiments, the fastening element may comprise a strap like, for example, a ratchet strap. Alternatively or additionally, the fastening element may comprise one or more elastic sections such as one or more springs and/or a spring form. The fastening element may, e.g. completely enclose the first set of energy storage cells. By applying a force on the cells, a secure fitting of the cells is ensured even in case components of the energy storage system are expanded or compressed when the system is heated up or cooled down.

In a preferred embodiment, the energy storage system further comprises at least a second set of energy storage cells, each energy storage cell of the second set being of the aforementioned type. In this embodiment, the second set of energy storage cells is arranged on top the first set of energy storage cells, such that one of the end sections of at least one energy storage cell of the second set is facing towards one of the end sections of one of the energy storage cells of the first set. The energy storage cells of the second set may be parallel and next to each other. The energy storage cells of the second set may all be identical and may e.g. be identical to the energy storage cells of the first set.

In this embodiment, at least two sets of energy storage cells may be stacked one upon the other. The first set and the second set may be spaced apart leaving a separation distance between the first and the second set of energy storage cells. Additionally, e.g. an insulating layer may be placed in the separation distance. However, with the end sections of the energy storage cells of the first and/or the second set being made of an electrically insulating material, the energy storage cells of the second set may be arranged directly on top of the energy storage cells of the first set. In other words, the end section of a cell of the second set may touch an end section of a cell of the first set. Hence, no separation distance is needed between the first and the second set of energy storage cells, thus increasing the storage density of the energy storage system. This provides an additional advantage over previously known energy storage systems, in which the energy storage cells usually require at least one electrical contact at an end face of the energy storage cell. While two sets of energy storage cells have been explicitly mentioned here, it is to be understood that the energy storage system may further comprise a third and, potentially, even more sets of energy storage cells. The third set of energy storage cells may be stapled on the second set of energy storage cells the same way as described for the second set being stapled on the first set. The same applies for the fourth set being stapled on the third set, the fifth set being stapled on the fourth set, and so on. In some embodiments, the energy storage system comprises more than 5, in particular more than 10 and preferably more than 15 additional sets of energy storage cells of the aforementioned type, the energy storage cells of each of the additional sets being stapled on another of the sets of energy storage cells.

In some embodiments, the energy storage cells of the first set are arranged such that the longitudinal axes of their housings are parallel. In these embodiments, the energy storage cells of the first set may further be arranged in a same first plane, the first plane being perpendicular to the longitudinal axes of the housings of the energy storage cells of the first set. It is further preferred that at least one additional set (such as a second set) of energy storage cells is arranged on top of the first set, wherein the energy storage cells of each additional set are arranged such that the longitudinal axes of their housings are parallel. Moreover, the energy storage cells of each additional set may be arranged in a respective plane perpendicular to the longitudinal axes of the housings of the cells of that set. For example, the energy storage cells of the second set may be arranged in a second plane perpendicular to the longitudinal axes of the housings of the cells of the second set. The planes of each set, such as the first and second planes, may be parallel to each other and may, in particular, be spaced apart by a plane distance. The plane distance may, e.g. correspond to a height of the housing of the energy storage cells.

According to a preferred embodiment, the energy storage system further comprises an anode contact element and a cathode contact element, the anode contact element being in electrical contact with the first surface portion of at least one energy storage cell of the first set and the cathode contact element being in electrical contact with the second surface portion of at least one other energy storage cell of the first set. In embodiments, in which the energy storage system further comprises at least a second set of energy storage cells as described above, the anode contact element may further be in electrical contact with the first surface portion of at least one energy storage cell of at least the second set of energy storage cells, and the cathode contact element may further be in electrical contact with the second surface portion of at least one other energy storage cell of at least the second set of energy storage cells.

The anode contact element and/or the cathode contact element may, for example, be formed of a metal such as copper or aluminium. In some embodiments, the anode contact element and/or the cathode contact element may extend parallel to the longitudinal axes of the housings of the energy storage cells. In embodiments of the energy storage system having an additional set of energy storage cells such as a second set of energy storage cells on top of the first set of energy storage cells, the anode contact element and/or the cathode contact element may extend over an energy storage cell of the first set and an energy storage cell of each of the additional sets of energy storage cells such as the second set of energy storage cells. Hence, only one anode contact element and one cathode contact element is needed to contact multiple sets of energy storage cells stacked one upon the other.

In some embodiments, the anode contact element may extend over the entire first surface portion of the at least one energy storage cell. Additionally or alternatively, the cathode contact element may extend over the entire second surface portion of the at least one other energy storage cell. In some embodiments, the anode contact element and/or the cathode contact element may extend over one or more lateral facets of each of one or more energy storage cells. In some embodiments, the anode contact element and/or the cathode contact element comprises a slab or rod of metal such as aluminium or copper.

The anode contact element and/or the cathode contact element may, e.g. have a triangular cross-section. This is, in particular, preferred for embodiments, in which an energy storage cell having the shape of a hexagonal prism is used. It is also preferred that the anode contact element and/or the cathode contact element couples to the first or the second surface portion, respectively, of at least two energy storage cells of the first and/or the second set of energy storage cells. In this embodiment, the current density at an interface between the energy storage cells and the contact element is reduced.

In a preferred embodiment, at least a first energy storage cell of the first set of energy storage cells comprises at least one peripheral cavity and/or a central cavity which is accessible through the housing as specified above. In this embodiment, the energy storage system may further comprise a fluid circuit coupled to the at least one peripheral cavity and/or the central cavity of the first energy storage cell of the first set of energy storage cells. The fluid circuit may, e.g. comprise an electrically insulating tubing. In some embodiments, the fluid circuit couples the peripheral and/or the central cavities of the energy storage cells of the first set of energy storage cells in parallel and/or in series. E.g. the fluid circuit may couple the peripheral and/or the central cavities of the energy storage cells of the first set of energy storage cells in parallel to each other, and in series to the peripheral and/or the central cavities of the energy storage cells of the second set of energy storage cells.

The fluid circuit may further comprise a pump to re-circulate a fluid through the fluid circuit and the at least one peripheral cavity and/or the central cavity. In some embodiments, the fluid circuit comprises a fluid, i.e. a liquid or a gas. The fluid may, preferably, be an electrically non-conductive fluid in order to avoid unwanted shortcuts. In some embodiments, the energy storage system further comprises cooling means and/or heating means thermally coupled to the fluid circuit. The cooling means and/or the heating means may be used to cool down or heat up the fluid in the fluid circuit, respectively. Additionally, a temperature sensor may be provided in thermal contact with the fluid of the fluid circuit or the electric energy source and the energy storage system may further comprise control circuitry coupled to the cooling means and/or the heating means and the temperature sensor to keep the temperature of the fluid within the fluid circuit in a pre-defined temperature interval.

In some embodiments, the end sections of the energy storage cells of the energy storage system are not electrically connected.

### Short Description of the Figures

In the following, further features and benefits of the present invention become evident by means of the following description of preferred embodiments when read in conjunction with the accompanying figures.
- Fig. 1: shows an energy storage cell according to an embodiment of the invention in a perspective view.
- Fig. 2: shows the energy storage cell of Fig. 1 in a schematic cross-sectional view.
- Fig. 3: shows an electric circuit diagram, in which energy storage cells according to an embodiment of the present invention are connected together.
- Fig. 4: shows a schematic view of six energy storage cells according to Fig. 2 arranged to form the electric circuit shown in Fig. 3.
- Fig. 5.: shows an energy storage system according to an embodiment of the invention.
- Fig. 6: shows a schematic cross-sectional view of an energy storage cell according to an embodiment of the invention including cavities for climatisation or as crush elements.
- Fig.7: shows an energy storage system according to another embodiment of the invention.
- Fig. 8: shows a partial perspective view of the storage cell of Fig. 1 when cut along a plane perpendicular to the longitudinal axis.
- Fig. 9: shows a distribution of cavities in the energy storage system of Fig. 7 in a schematic cross-sectional view.

### Detailed Description

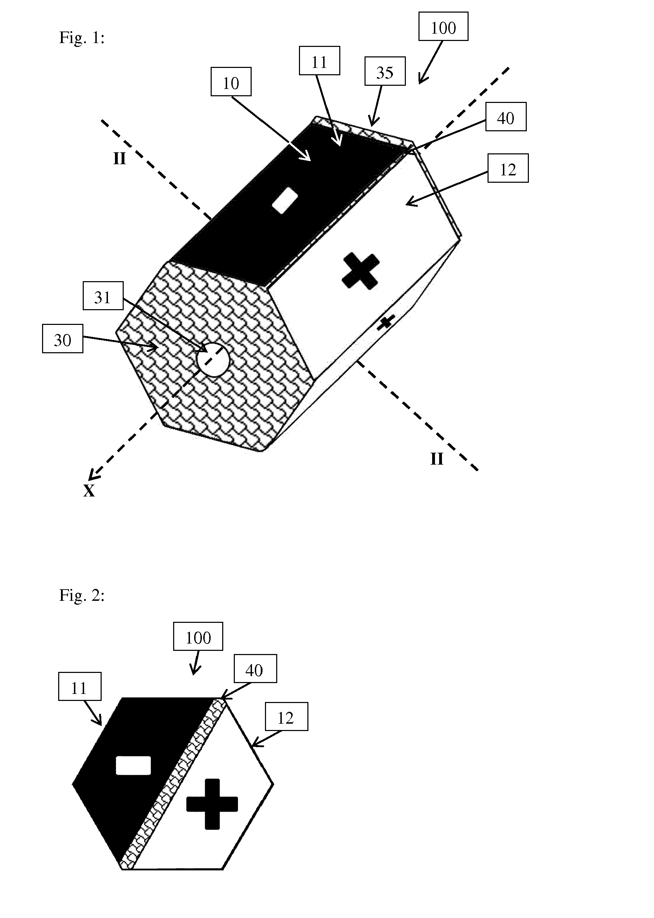

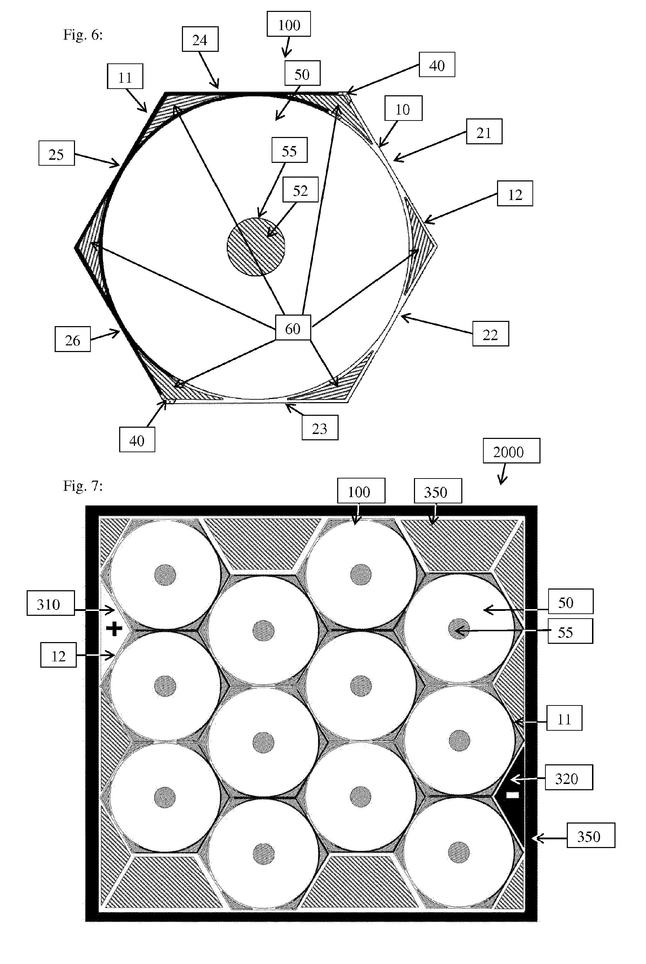

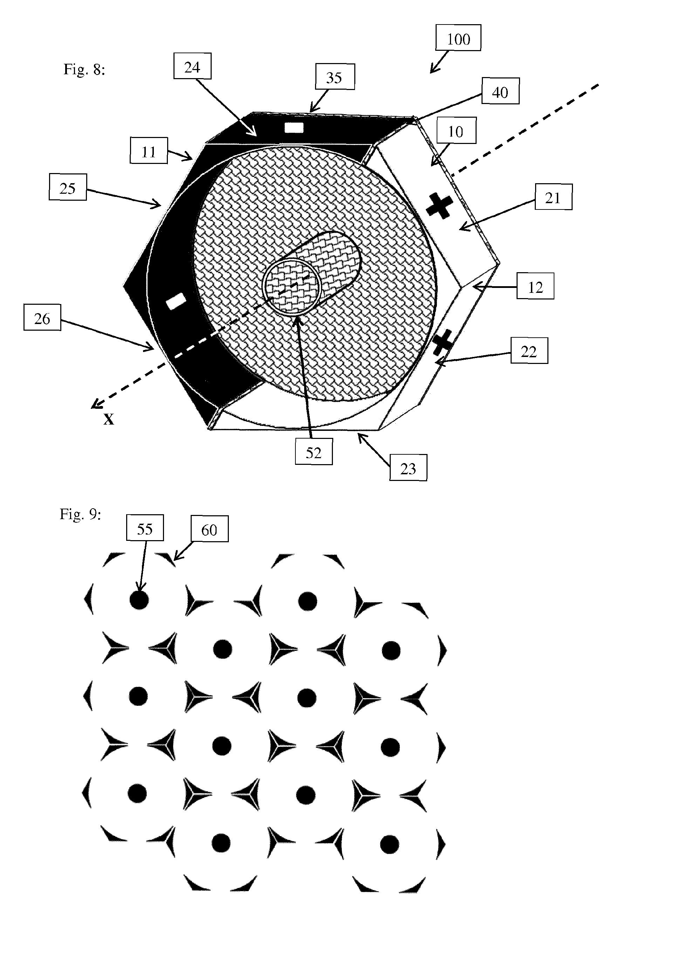

Figure 1 shows an energy storage cell 100 according to an embodiment of the invention in a perspective view. The energy storage cell 100 comprises a prismatic housing 10. The housing 10 comprises a circumferential section and defines a longitudinal axis x. In a cross-sectional view in a plane perpendicular to the longitudinal axis x, indicated by line II-II in Fig. 1, the housing 10 has a cross-section in the shape of a regular hexagon, as illustrated in more detail in Figs. 6 and 8. Accordingly, the lateral area of the housing 10 comprises six lateral facets 21-26, which are all of the same size and shape. The six lateral facets 21-26 are separated by six lateral edges. Three adjacent lateral facets 24-26 are electrically coupled together to form a first electrically conductive surface portion 11. Another three adjacent lateral facets 21-23 are electrically coupled together to form a second electrically conductive surface portion 12. As can also be seen in Figs. 6 and 8, the lateral facets 24-26 forming the first surface portion are electrically insulated from the lateral facets 21-23 forming the second surface portion 12 by an insulating separator element 40 which extends along the housing 10 In some embodiments (not shown), the insulating separator element 40 may further run through the housing 10 and through the electric energy source 50. However, in the illustrated embodiment, a jelly roll is used as electric energy source 50 having its own insulating separation layer, as described in the following.

The energy storage cell 100 of Figures 1, 6 and 8 further comprises a jelly roll as an electric energy source 50 (not shown in Figs. 1 and 8), which is arranged inside the housing 10. The jelly roll 50 comprises an anode and a cathode. The anode of the jelly roll 50 is electrically coupled to the first surface portion 11 of the housing 10, while the cathode of the jelly roll 50 is electrically coupled to the second surface portion 12 of the housing 10. The surface area of the first surface portion 11 is equal to the surface area of the second surface portion 12. The first surface portion 11 may be coated with a conductive coating of a first colour, for example red, while the second surface portion 12 may be coated with a conductive coating of a second colour, for example blue (not shown).

Returning to Figure 1, the housing 10 of the energy storage cell 100 further comprises two end sections 30 and 35 defining hexagonal base areas of the housing 10. The end sections 30 and 35 of the housing 10 are parallel to each other and are connected by the circumferential section of the housing 10. The end sections 30 and 35 each comprise an electrically insulating material, such as rubber or a non-conductive polymer. In other embodiments (not shown), the end sections 30, 35 may also be made of electrical conductive material and be insulated against at least one of the circumferential poles.

As can also be seen in Figure 1, an opening 31 is formed in the end section 30. In more detail, the opening 31 is a circular opening formed in the centre of the end section 30. As will be described in more detail below, the opening 31 in the end section 30 is connected to a central cavity (or channel) running through the jelly roll 50 of the energy storage cell 100. The end section 35 opposing the end section 30 has a similar opening (not shown), which is also connected to the central cavity of the energy storage cell 100. The openings formed in the end sections 30, 35 of the housing 10 may be used as inlet and outlet openings, respectively, for a heating or a cooling fluid.

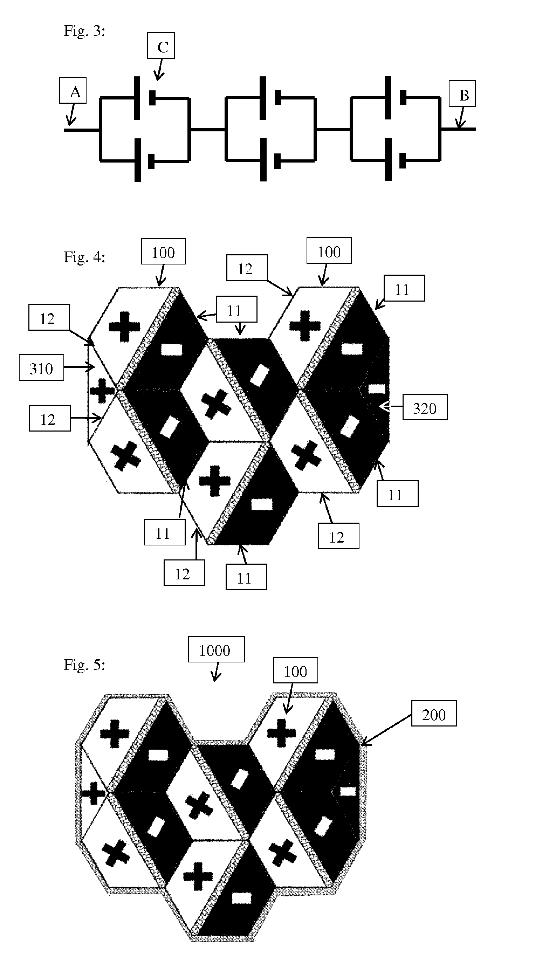

Figure 2 shows a schematic cross-sectional view of the energy storage cell 100 shown in Figure 1. It represents both electrically surface portions 11, 12 as well as the insulating separator element 40 in between. This illustration should help to easily demonstrate the electric and mechanic connection of several individual energy storage cells in Figures 4 and 5.

Figure 3 shows an electric circuit diagram of a model energy storage system that may be implemented using the energy storage cells of an embodiment of the invention, such as the energy storage cell 100 illustrated in Figs. 1, 6 and 8. In the electric circuit diagram of Figure 3, two energy storage cells C are connected in parallel, forming a pair of energy storage cells with twice the capacity of a single energy storage cell. Three of such pairs of energy storage cells are connected in series between two nodes A and B in order to triple the overall voltage.

Based on the schematic illustration of Figure 2, Figure 4 shows a cross-sectional view through an array of six energy storage cells 100 coupled together to form the electric circuit shown in Figure 3. In practice, the lateral areas of adjacent energy storage cells 100 touch each other, such that no gap is formed in between them.

As can be seen in Figure 4, the six energy storage cells 100 are oriented and put together in a way, such that two energy storage cells 100 form a pair of energy storage cells coupled in parallel. Three of such pairs are then coupled in series. Moreover, an anode contact element 320 is shown in Figure 4 which electrically and mechanically connects to the first surface portions 11 of two energy storage cells at node B shown in Figure 3. Similarly, a cathode contact element 310 is electrically and mechanically coupled to the second surface portions 12 of two different energy storage cells 100 at the other end of the array shown in Figure 4, at the position illustrated as node A in Figure 3. The anode and cathode contact elements 320, 310 each have a triangular cross section.

An arbitrarily shaped and dimensioned space can easily be filled by flexibly putting the energy storage cells 100 together, using an appropriate number and configuration of energy storage cells 100. As can be understood, the energy storage cells 100 may easily be re-arranged to form any other circuit because of their geometry and since they are just pushed together. Additionally or alternatively, energy storage cells 100 may be added or removed from the array shown in Figure 4.

In some embodiments, the energy storage cell 100 illustrated in the figures comprises a lithium-ion jelly roll having an output voltage of V_{c} = 4.2 V. By coupling six of such energy storage cells together in the array shown in Figure 4, an output voltage of the array of Vₐ = 12.6 V may be achieved, corresponding to the voltage between nodes A and B in Figure 3. However, the invention is not limited in this way. In some embodiments, other electric energy sources, such as other jelly rolls may be used in the energy storage cell 100, having a different output voltage V_{c}. Alternatively or additionally, different numbers of energy storage cells 100 may be coupled in parallel or in series to achieve other output voltages Vₐ of an energy storage system. Generally, by connecting multiple energy storage cells in parallel, the capacity is multiplied.

In order to mechanically stabilize the energy storage cells 100 of the array shown in Figure 4, a fastening element 200 may be used as illustrated in Figure 5. Figure 5 shows an energy storage system 1000 similar to that shown in Figure 4. Instead of the massive electrode contact elements 320, 310, another form of anode and cathode contact elements could be incorporated in the fastening element 200, e.g. by providing an electric coating (not shown) on appropriate portions of the interior surface of the fastening element 200. The fastening element 200 may comprise a ratchet strap or a spring form. The fastening element 200 is adapted to apply a mechanical force to the energy storage cells 100 of the energy storage system 1000 to press the energy storage cells 100 together. Except for the interior surface portions used to selectively contact first and second surface portions of some of the energy storage cells 100, the interior surface of the fastening element 200 may be electrically insulating.

The fastening element 200 of the energy storage system 1000 as shown in Figure 5 completely encloses the energy storage cells 100. However, it may be understood by the skilled person that, in alternative embodiments, the fastening element 200 may only partially enclose the energy storage cells 100. The fastening element 200 may comprise an elastic material, such as a spring to apply the mechanical force on the energy storage cells 100.

Figure 6 shows a schematic cross-sectional view through an energy storage cell 100 of an embodiment of the invention. In addition, the space for the electric energy source, i.e. the jelly roll 50 inside the housing 10 of the energy storage cell 100 is illustrated. As can be seen from Figure 6, in this embodiment, the jelly roll 50 has a circular cross-section. In particular, the jelly roll 50 may be cylindrical. By arranging the jelly roll 50 having a circular cross-section within the housing 10 having a hexagonal cross-section, peripheral cavities 60 are formed between the housing 10 and the jelly roll 50. The peripheral cavities 60 are formed between the lateral edges of the housing 10 and the jelly roll 50. The peripheral cavities 60 extend along the longitudinal axis x of the housing 10 illustrated in Figs. 1 and 8. In some embodiments, the peripheral cavities 60 shown in Fig. 6 are also open at the end sections 30, 35. In these embodiments, these cavities 60 could additionally be used for climatisation or as crush elements.

As also shown in Figure 6, the jelly roll 50 of the energy storage cell 100 comprises a spindle 55 in the centre thereof. During fabrication of the jelly roll 50, the spindle 55 may be used to roll up the anode and the cathode layers as well as separating layers of the jelly roll 50. In some embodiments, the spindle 55 of the jelly roll 50 may be hollow. The spindle 55 encloses a hollow space forming a central cavity (or channel) 52 of the energy storage cell 100.

As can be seen in Figure 6, in embodiments, in which the housing 10 has a hexagonal cross-section, there may be six peripheral cavities 60 and one central cavity 52.

The peripheral cavities 60 and the central cavity 52 may serve one or more purposes. For example, during a crash, they may function as to cushion the impact of the crash, such that damage to the jelly roll 50 is prevented or at least diminished. To this effect, the channels 60 may be empty. In some embodiments, however, a cushioning element (not shown) may be arranged in one or more of the peripheral cavities 60 and/or the central cavity 52.

In other embodiments (not shown), the peripheral cavities 60 are accessible through the housing 10, e.g. via openings in the circumferential section or in at least one of the end sections 30, 35. Hence, a fluid such as a cooling fluid or a heating fluid may be introduced into the peripheral cavities 60 to modify the temperature of the jelly roll 50.

Figure 7 shows an energy storage system 2000 according to another embodiment of the invention. The energy storage system 2000 comprises 12 energy storage cells 100. To be able to electrically connect the energy storage cells 100 from the exterior, an anode contact element 320 and a cathode contact element 310 are provided. Each of the contact elements 320, 310 contacts two energy storage cells 100 of the 12 energy storage cells 100 shown in Fig. 7. In embodiments, in which the energy storage system comprises one or more additional sets of energy storage cells 100 on top or below the displayed set of 12 energy storage cells, the anode and the cathode contact elements 320, 310 may also contact these additional sets of energy storage cells 100. The energy storage cells 100 and the anode and cathode contact elements 320, 310 are enclosed by a fastening element 300. The fastening element 300 shown in Figure 7 has a rectangular cross-section. By enclosing the hexagonal energy storage cells 100 with the rectangular fastening element 300, voids 350 are formed between the energy storage cells 100 and the fastening element 300. In some embodiments, the voids 350 may be filled with cushioning elements. Alternatively or additionally, the voids 350 may be left empty to serve as additional channels to introduce a cooling or heating fluid.

Figure 8 is a perspective view to better illustrate the positioning of the central cavity 52. In particular, the central cavity 52 forms a channel and extends along the longitudinal axis x of the energy storage cell 100. At the end sections 30, 35 of the housing 10 of the energy storage cell 100, the central cavity 52 may be connected to openings such as the opening 31 of the end section 30 illustrated in Figure 1. Using the openings in the end sections 30, 35 of the housing 10, a fluid may be introduced into the central cavity 52. The fluid may comprise a liquid or a gas to regulate a temperature of the jelly roll 50 of the energy storage cell 100.

In some embodiments, the energy storage system according to the invention may further comprise a fluid circuit (not shown) coupled to the central cavity 52 of the energy storage cell 10 via the openings in the end sections 30, 35. The fluid circuit may comprise elements such as a pump, a heating element, a heat pipe or a cooling element as may be described elsewhere in this description. The fluid circuit may be coupled to one or more, in particular, to all energy storage cells of the energy storage system. In some embodiments, the fluid circuit may additionally or alternatively be coupled to the peripheral cavities 60 of some or all energy storage cells of the energy storage system. To this effect, the housing 10 may comprise one or more openings connected to one or more of the peripheral cavities 60, for example openings in the end sections 30, 35 of the energy storage cell(s).

In Figure 9, the energy storage cells 100 of the energy storage system 2000 of Figure 7 are shown in a schematic cross-sectional view. The shaded areas in Figure 10 illustrate the position of the peripheral cavities 60 and the central cavities 52 of the energy storage cells 100. The central cavities 52 and/or the peripheral cavities 60 of some or all of the energy storage cells 100 of the energy storage system 2000 may act as cushioning spaces in case of a crash. The central cavities 52 and the peripheral channels 60 may cushion the jelly rolls in case of a crash even if they are filled with a fluid to control the temperature of the jelly rolls as described above. Figure 9 shows that the cavities are evenly distributed all over the system, which can provide a homogeneous climatisation or cushioning against mechanical shocks.

Many modifications and alterations of the described embodiments are possible. For example, the housing of the energy storage cell may have a different cross-section, such as a rectangular, in particular a quadratic, or an n-cornered cross-section with n ≥ 8. In some embodiments, the first and/or the second surface portion of the energy storage cell may comprise a curved surface section and/or one or more protrusions and/or recesses. In some embodiments of the energy storage system, a further set of energy storage cells may be positioned on top of a first set of energy storage cells such as the energy storage cells illustrated in Figures 5 and 7. In some of these embodiments, the same anode and cathode contact elements may be used to connect both sets of energy storage cells.

### Reference numerals

| | |
|---|---|
| 10 | housing |
| 11 | first surface portion |
| 12 | second surface portion |
| 100 | energy storage cell |
| 1000 | energy storage system |
| 21-26 | lateral facets |
| 200 | fastening element |
| 2000 | energy storage system |
| 30, 35 | end sections |
| 31 | opening |
| 300 | fastening element |
| 310 | cathode contact element |
| 320 | anode contact element |
| 350 | void |
| 40 | separator element |
| 50 | jelly roll |
| 52 | central cavity |
| 55 | spindle |
| 60 | peripheral cavity |

## Claims

1. An energy storage cell (100) comprising an electric energy source (50) and a housing (10),
the electric energy source (50) being arranged in the housing (10) and having an anode and a cathode,
wherein the housing (10) comprises a circumferential section and two opposing end sections (30, 35), the circumferential section defining a lateral area of the housing (10) and the end sections (30, 35) defining base areas of the housing (10),
wherein the lateral area comprises at least a first electrically conductive surface portion (11) and a second electrically conductive surface portion (12), the first and second surface portions (11, 12) being electrically isolated from each other,
wherein the first surface portion (11) is electrically coupled to the anode of the electric energy source (50) and wherein the second surface portion (12) is electrically coupled to the cathode of the electric energy source (50).

2. The energy storage cell (100) of claim 1, wherein the lateral area of the housing (10) comprises a number of lateral facets (21-26) with adjacent lateral facets (21-26) being separated by lateral edges of the housing (10).

3. The energy storage cell (100) of claim 2, wherein the housing (10) is in the shape of a prism, in particular, a regular prism and/or a hexagonal prism.

4. The energy storage cell (100) of claim 2 or 3, wherein the first surface portion (11) and the second surface portion (12) extend over different lateral facets (21-26) of the housing (10).

5. The energy storage cell (100) of any of claims 2 to 4, wherein each of the first and the second surface portions (11, 12) extends over at least two lateral facets (21-26), in particular, over at least two adjacent lateral facets (21-26).

6. The energy storage cell (100) of any of the preceding claims, wherein the first surface portion (11) comprises a first surface structure defining at least one protrusion and/or at least one recess, and wherein the second and/or the first surface portion (12) comprises a second surface structure defining at least one recess and/or at least one protrusion, wherein the first surface structure is formed to match the second surface structure.

7. The energy storage cell (100) of any of the preceding claims, wherein at least one of the end sections (30, 35) of the housing (10), preferably each of the end sections (30, 35) of the housing (10), is made of an electrically insulating material.

8. The energy storage cell (100) of any of the preceding claims, further comprising at least one peripheral cavity (60) formed between the electric energy source (50) and the circumferential section of the housing (10), in particular, at a lateral edge of the housing (10).

9. The energy storage cell (100) of any of the preceding claims, further comprising a central cavity (52) formed within the electric energy source (50).

10. The energy storage cell (100) of claim 8 or 9, wherein the at least one peripheral cavity (60) and/or the central cavity (52) is accessible through the housing (10), in particular, through at least one opening (31) in at least one of the end sections (30, 35) of the housing (10).

11. An energy storage system (1000; 2000) comprising a first set of energy storage cells (100), each of the energy storage cells (100) of the first set according to any of the preceding claims, wherein the first surface portion (11) and/or the second surface portion (12) of each energy storage cell (100) of the first set is in electrical and mechanical contact with the first surface portion (11) and/or the second surface portion (12) of another one of the energy storage cells (100) of the first set.

12. The energy storage system (1000; 2000) of claim 11, further comprising a fastening element (200; 300), wherein the fastening element (200; 300) at least partially encloses the first set of energy storage cells (100) to keep the energy storage cells (100) together, wherein, in particular, the fastening element (200; 300) applies a mechanical force on the first set of energy storage cells (100) to press the first set of energy storage cells (100) together.

13. The energy storage system of claim 11 or 12, further comprising at least a second set of energy storage cells, each energy storage cell of the second set according to any of claims 1 to 10, the second set of energy storage cells being arranged on top of the first set of energy storage cells, such that one of the end sections of at least one energy storage cell of the second set is facing towards one of the end sections of one of the energy storage cells of the first set.

14. The energy storage system (2000) of any of claims 11 to 13, further comprising an anode contact element (320) and a cathode contact element (310), the anode contact element (320) being in electrical contact with the first surface portion (11) of at least one energy storage cell (100) of the first set and the cathode contact element (310) being in electrical contact with the second surface portion (12) of at least one other energy storage cell (100) of the first set,
wherein, in particular, the energy storage system is according to claim 13 and the anode contact element (320) is further in electrical contact with the first surface portion (11) of at least one energy storage cell (100) of at least the second set of energy storage cells, and the cathode contact element (310) is further in electrical contact with the second surface portion (12) of at least one other energy storage cell (100) of at least the second set of energy storage cells.

15. The energy storage system of any of claims 11 to 14, wherein at least a first energy storage cell of the first set of energy storage cells is according to claim 10, and wherein the energy storage system further comprises a fluid circuit coupled to the at least one peripheral cavity and/or the central cavity of the first energy storage cell of the first set of energy storage cells.
